# FASCICULE DE BREVET EUROPEEN

(11) **EP 3 194 728 B1**
(45) Date de publication et mention de la délivrance du brevet: **17.04.2019**
(21) Numéro de dépôt: 15763959.2
(22) Date de dépôt: 03.08.2015
(51) Int. Cl.: F01D 5/20

(54) **BAIGNOIRE DE SOMMET D'AUBES D'UNE TURBINE DE TURBOMACHINE**
SQUEALERSPITZE EINER TURBINENSCHAUFEL FÜR TURBOMASCHINE
TURBOMACHINE TURBINE BLADE SQUEALER TIP

(30) Priorité: 05.08.2014 FR 1457610
(43) Date de publication de la demande: 26.07.2017
(73) Titulaire: SAFRAN AIRCRAFT ENGINES, 75015 Paris (FR)
(72) Inventeur: AUZILLON, Pierre, Guillaume, F-77550 Moissy-Cramayel Cedex (FR); OLIVE, Rémi, Philippe, Oswald, F-77550 Moissy-Cramayel Cedex (FR); PIERRE, Marjolaine, Marie-Anne, F-77550 Moissy-Cramayel Cedex (FR)
(74) Mandataire: Regimbeau
(86) Numéro de dépôt international: PCT/FR2015/052141
(87) Numéro de publication internationale: WO 2016/020614

(56) Documents cités:
- JP-A- 2002 227 606
- US-A1- 2008 044 289
- US-A1- 2009 162 200
- US-A1- 2010 303 625

## Description

La présente invention concerne les aubes de turbine de turbomachine.

Elle trouve notamment avantageusement application dans le cas de turbines haute pression en sortie de la chambre de combustion d'un turboréacteur.

### DOMAINE TECHNIQUE GÉNÉRAL ET ETAT DE LA TECHNIQUE

On prévoit classiquement entre les aubes d'une turbine de turbomachine et la face interne de l'anneau dans lequel ledit rotor tourne, un jeu en sommet d'aube qui permet la rotation dudit rotor. Du fait du mouvement du rotor et de la différence de pression entre l'intrados et l'extrados des aubes, des écoulements de fuite se créent au niveau du jeu entre le sommet de chacune des aubes et la face interne de l'anneau. Ces écoulements, et les tourbillons qu'ils créent au niveau de l'extrados, sont la source de nombreux problèmes aérodynamiques et aérothermiques qui affectent directement les performances de la turbomachine.

Le jeu entre le sommet des aubes et la surface interne de l'anneau est généralement ajusté afin de réduire ces écoulements. Néanmoins, la réduction de ce jeu augmente le risque de contacts entre les aubes et la surface interne de l'anneau et limite fortement la durée de vie des aubes ; en outre, elle entraine également une augmentation de la température du sommet des aubes, ce qui a aussi un impact sur la durée de vie des aubes.

Pour pallier cet inconvénient, il est classiquement connu de prévoir des baignoires au sommet des aubages, ce qui permet de limiter la surface de contact entre l'aube et l'anneau. Ces baignoires sont généralement définies par un rebord qui délimite un contour fermé et qui s'étend à cet effet, au niveau du sommet de l'aube, le long de l'extrados et de l'intrados, du bord d'attaque au bord de fuite.

Des configurations de baignoires destinées à permettre d'optimiser les performances aérodynamiques et aérothermiques des aubes ont notamment été proposées. Les demandes de brevet EP1748153 et WO2009/115728 de la demanderesse qui proposent par exemple des configurations de baignoires comportant plusieurs cavités ou intégrant des déflecteurs pour guider les écoulements de fuite au niveau du sommet de l'aube sont notamment connues. US2008/0044289, et US2009/0162200 divulguent aussi une aube de turbomachine comportant une baignoire à son sommet.

Les solutions connues dans l'art antérieur à ce jour s'avèrent toutefois insuffisantes au vu notamment des performances demandées aux turboréacteurs de nouvelle génération.

### PRÉSENTATION GÉNÉRALE DE L'INVENTION

Un but général de l'invention est d'augmenter les performances aérodynamiques /aérothermiques d'aubes de turbines.

Notamment, l'invention propose une structure de baignoire en sommet des aubes qui permet une augmentation du rendement de la turbine.

On notera ici que dans le cas de turboréacteurs, une augmentation de rendement des turbines est directement répercutée sur le rendement et la consommation spécifique du turboréacteur lui-même. C'est la raison pour laquelle la solution proposée trouve avantageusement application dans le cas d'aubes de turbine haute pression de turboréacteur.

En particulier, selon un aspect, l'invention consiste en une aube de turbine de turbomachine comportant un extrados, un intrados, un bord d'attaque et un bord de fuite et ainsi qu'une baignoire à son sommet, ladite baignoire comportant au moins une nervure interne, caractérisée en ce que ladite nervure s'étend depuis un point d'accroche du rebord de ladite baignoire côté extrados à un point d'accroche du rebord de ladite baignoire côté intrados et comporte une portion de reprise de la charge des écoulements de fuite qui s'étend à partir de l'extrados et une portion formant un déflecteur qui prolonge la portion de reprise de charge avec une inflexion et guide les écoulements de fuite vers l'intrados.

Selon un autre aspect, une zone de la portion de reprise d'effort de la nervure qui est directement en regard du bord d'attaque est parallèle à la tangente au bord d'attaque.

Selon un aspect supplémentaire, l'angle que fait la nervure par rapport à la normale à l'extrados au niveau du point d'accroche est compris entre -20° et +20°, préférentiellement entre -18° et 3°.

Selon un aspect additionnel, l'abscisse curviligne du point d'accroche le long du rebord de la baignoire côté extrados est comprise entre 10% et 26%, préférentiellement entre 13% et 21%.

Selon un autre aspect, l'abscisse curviligne du point d'accroche le long du rebord de la baignoire côté intrados est comprise entre 18% et 66%, préférentiellement entre 26% et 49%.

Selon un aspect supplémentaire, l'angle que fait la nervure par rapport à la normale à l'intrados au niveau du point d'accroche est compris entre 0° et 50°, préférentiellement entre 19° et 43°.

Selon un aspect additionnel, l'abscisse curviligne du point où la nervure coupe la ligne de squelette de l'aube est comprise 13% et 43%, préférentiellement entre 21% et 35%.

Selon un autre aspect, l'écart entre la ligne de squelette et le point d'inflexion de la nervure est compris entre -0,8mm et 1,2mm, préférentiellement entre -0,5mm et 1,2mm.

### DESCRIPTIF DES FIGURES

D'autres caractéristiques, buts et avantages de la présente invention apparaitront à la lecture de la description détaillée qui va suivre, et en regard des dessins annexés, donnés à titre d'exemples non limitatifs et sur lesquels :
- la figure 1 représente une vue en perspective d'un sommet d'une aube d'une roue mobile sur lequel a été réalisée une baignoire selon un premier mode de réalisation de l'invention ;
- la figure 2 représente la même vue du premier mode de réalisation de l'invention que dans la figure 1, cette figure mettant en valeur les différentes portions de la rainure ;
- la figure 3 représente la même vue du premier mode de réalisation de l'invention que dans les figures 1 et, cette figure permettant de mettre en valeur la direction de la nervure au niveau de l'intrados et de l'extrados ;
- la figure 4 représente la même vue du premier mode de réalisation de l'invention que dans les figures 1 à 3, cette figure permettant de mettre en valeur la position du point de liaison entre la nervure et l'extrados ;
- la figure 5 représente la même vue du premier mode de réalisation de l'invention que dans les figures 1 à 4, cette figure permettant de mettre en valeur la position du point de liaison entre la nervure et l'intrados ;
- la figure 6 représente une vue de haut de l'aube selon du premier mode de réalisation de l'invention ;
- la figure 7 représente la même vue que dans la figure 6, cette figure permettant de mettre en valeur l'écart entre le point d'inflexion de la nervure et la ligne de squelette de l'aube ;
- la figure 8 représente la même vue que dans les figures 6 et 7, cette figure permettant de mettre en valeur la direction de la nervure à son point d'inflexion ;

### DESCRIPTION D'UN OU PLUSIEURS MODES DE REALISATION DETAILLES

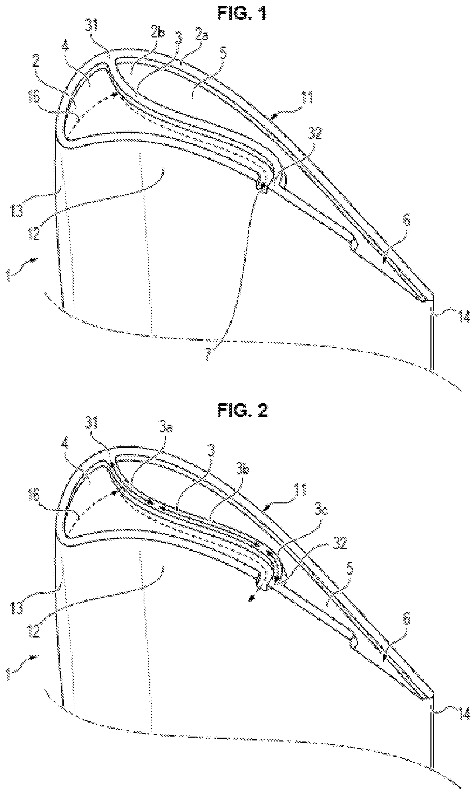

On a représenté sur les figures 1 et suivantes, une aube 1 de turbine haute pression de turboréacteur. Dans le turboréacteur, la turbine comprend un disque sur lequel est montée circonférentiellement une pluralité d'aubes 1. Ce disque et les aubes sont placés à l'intérieur d'un anneau situé en aval d'une chambre de combustion. Les aubes de la turbine et l'anneau sont dimensionnés pour que le jeu entre l'anneau et les aubes soit limité.

Une telle aube 1 a un profil aérodynamique et présente un extrados convexe 11 et un intrados concave 12 qui s'étendent l'un et l'autre entre d'une part un bord amont arrondi qui forme un bord d'attaque 13 et d'autre part un bord de fuite 14.

A son sommet, destiné à être en regard de la face interne de l'anneau, l'aube 1 présente une baignoire 2 définie par un rebord 2a qui borde le fond 2b de ladite baignoire en s'étendant le long de l'extrados 11 et de l'intrados 12, du bord d'attaque 13 au bord de fuite 14.

L'intérieur de ladite baignoire 2 est divisé en deux cavités 4 et 5 par une nervure 3 qui est de même hauteur que le rebord 2a.

Cette nervure 3, comme montré dans la figure2, s'étend entre un point d'accroche 31 situé sur la portion de ce rebord 2a qui longe l'extrados 11 et un point 32 situé sur la portion de ce rebord 2a qui longe l'intrados 12. Elle présente :
- une portion 3a qui s'étend à partir de l'extrados 11 et qui crée un obstacle aux écoulements de fuite 16 qui arrivent dans la cavité 4 par le bord d'attaque 13 ;
- une portion 3b qui prolonge la portion 3a avec une inflexion et qui sert de déflecteur pour guider la sortie des écoulements de fuite du côté intrados.

Une telle nervure 3 permet de récupérer une partie de l'effort de charge des écoulements de fuite 16, qui viennent s'appuyer sur ladite nervure 3 ; elle permet également de baisser la température du sommet de l'aube 1 et de l'anneau, en empêchant que l'air chaud ne s'introduise sur l'ensemble de la baignoire 2, ce qui contribue à augmenter la durée de vie de l'aube 1.

Notamment, afin de maximiser la récupération de l'effort de charge, la zone de la portion 3a de la nervure 3 qui est directement en regard du bord d'attaque 13 (zone de la portion 3a qui est la plus proche de celui-ci) est parallèle à la tangente au bord d'attaque 13, de façon à être perpendiculaire à la direction des écoulements de fuite 16 entrant par ledit bord d'attaque 13.

La portion 3a récupère ainsi un effort maximum.

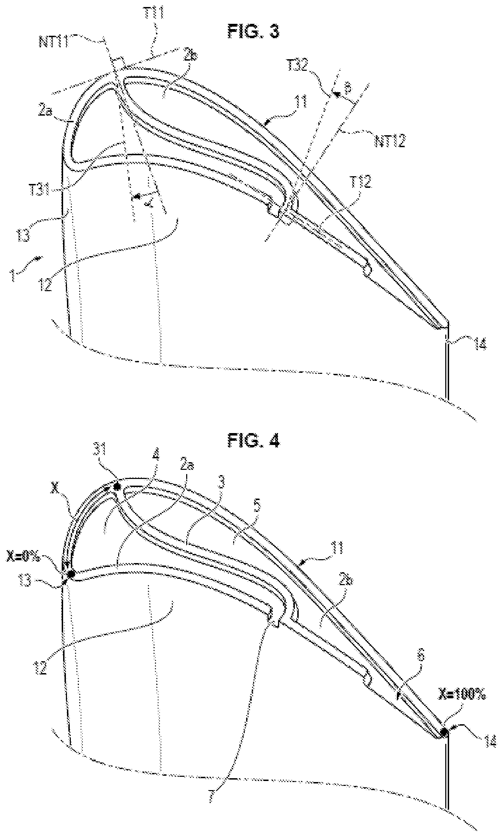

L'orientation de la nervure 3 au niveau du point d'accroche 31 est également optimisée. En particulier, l'angle que fait la nervure 3 par rapport à la perpendiculaire à l'extrados 11 au niveau du point d'accroche 31 (sur la figure 3, angle α entre la tangente T31 et la normale NT11 perpendiculaire à la tangente T11 de l'extrados 11 au point 31) est avantageusement compris entre -20° et +20°, plus avantageusement entre -18° et 3°, et encore plus avantageusement entre -16° et -14° (le signe de l'angle α étant déterminé selon le sens trigonométrique, de la normale NT11 vers la tangente T31).

La position du point d'accroche 31 sur l'extrados 11 est un compromis qui est choisi pour optimiser la reprise de charge des écoulements de fuite tout en évitant ou limitant le passage d'air chaud au-dessus de la nervure 3. On comprend en effet que plus le point d'accroche 31 est proche du bord d'attaque 13 et plus il existe un risque qu'une partie des écoulements de fuite passent au-dessus de la nervure 3, dans la cavité 5, de sorte que le rendement de la reprise d'effort ne serait pas optimal.

La position curviligne du point d'accroche 31 le long de la ligne d'extrados (abscisse curviligne X sur le figure 4 - détermination entre le bord d'attaque 13 (X=0%) et le bord de fuite 14 (X=100%)) est par conséquent préférentiellement comprise entre 10% et 26%, plus préférentiellement entre 13% et 21%, et encore plus de préférence entre 15% et 17%.

Par ailleurs, au-delà de la zone de la portion 3a qui est en regard du bord d'attaque 13 et où le flux des écoulements de fuite vient buter contre la nervure 3, la nervure 3 est infléchie et se prolonge par la portion 3b qui sert de déflecteur. Cette portion 3b qui sert à guider les écoulements de fuite est orientée pour que lesdits écoulements de fuite sortent de l'intrados 12 en étant autant que possible parallèles à l'écoulement principal le long de l'intrados 12.

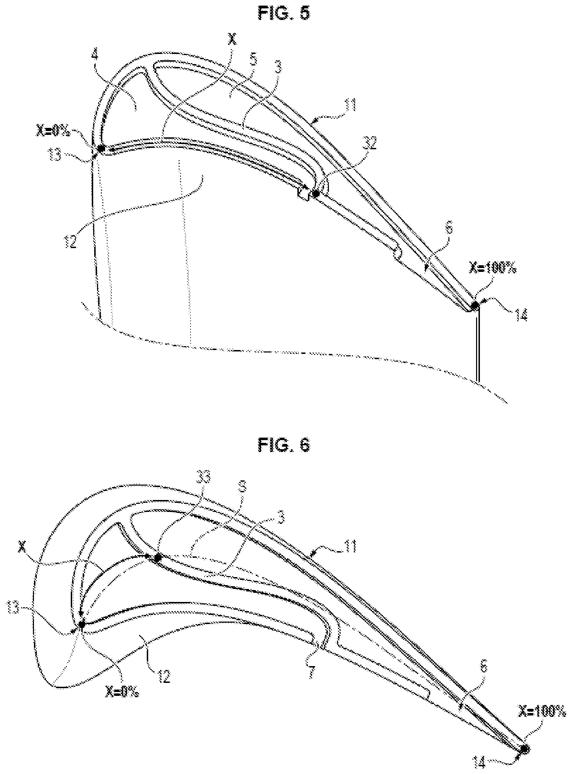

A cet effet, le point d'accroche 32 est positionné le long de l'intrados 12 en étant décalé vers le bord de fuite 14. La position curviligne de ce point d'accroche 32 le long de la ligne d'intrados (abscisse X sur la figure 5 - détermination entre le bord d'attaque 13 (X=0%) et le bord de fuite 14 (X=100%)) est préférentiellement comprise entre 18% et 66%, avantageusement entre 26% et 49%, et encore plus avantageusement entre 32% et 36%.

On notera ici que plus le point d'accroche 32 est proche du bord de fuite 14 et plus l'écoulement de fuite présent dans la cavité est guidé pour sortir parallèlement à l'écoulement principal le long de l'intrados, ce qui est favorable au rendement de l'aube. Par contre, l'air chaud reste plus longtemps dans la cavité 4, ce qui est défavorable en termes de durée de vie pour l'aube. Les gammes données ci-dessus pour les valeurs d'abscisses curvilignes du point 32 permettent de bons compromis entre les propriétés aérodynamiques et aérothermiques de l'aube 1.

Le fait que la nervure 3 comprenne un point d'inflexion permet d'une part à la portion 3a de reprise de charge d'être à une distance du bord d'attaque 13 et d'avoir une direction pour lesquelles la récupération des efforts de charge est plus la importante possible; et d'autre part à la portion 3b qui sert de déflecteur d'être à une distance de la paroi de l'intrados 12 et d'avoir une direction permettant d'optimiser les propriétés aérodynamiques et aérothermiques de l'aube 1. C'est l'inflexion de la nervure 3 qui permet d'obtenir, en une unique nervure, une forme qui assure un compris entre les différentes formes possibles de nervures internes qui n'optimisent qu'un paramètre de l'aube 1, au détriment des autres paramètres.

L'orientation de la nervure 3 au niveau du point d'accroche 32 peut également être optimisée, notamment pour permettre le démoulage de la baignoire 2 dans le cas d'une fabrication de l'aube par fonderie (moulage à la cire). C'est la raison pour laquelle la nervure 3 présente au niveau du point d'accroche une portion 3c elle-même infléchie par rapport à la portion 3b qui forme un déflecteur dans le prolongement de la partie 3a. L'angle que fait cette portion 3c par rapport à la perpendiculaire à l'intrados 12 (sur la figure 3, angle β entre la tangente T32 et la normale NT12 perpendiculaire à la tangente T12 de l'intrados 13 au point 32) est avantageusement compris entre 0° et 50°, préférentiellement entre 19° et 43°, et encore plus préférentiellement entre 35° et 40° (le signe de l'angle β étant déterminé selon le sens trigonométrique, de la normale NT12 vers la tangente T32).

L'optimisation de la forme de la nervure 3 peut également prendre en compte la façon dont celle-ci s'étend par rapport au squelette de l'aube 1.

En particulier, comme montré dans la figure 6, la position du point 33 où la nervure 3 coupe la ligne S de squelette de l'aube 1 est préférentiellement comprise 13% et 43%, préférentiellement entre 21% et 35%, et encore plus préférentiellement entre 25% et 29% (sur la figure 6, abscisse X le long de la ligne S de squelette - détermination entre le bord d'attaque 13 (X=0%) et le bord de fuite 14 (X=100%)).

La ligne S de squelette est la ligne qui est constituée par l'ensemble des points équidistants de l'intrados 12 et de l'extrados 11.

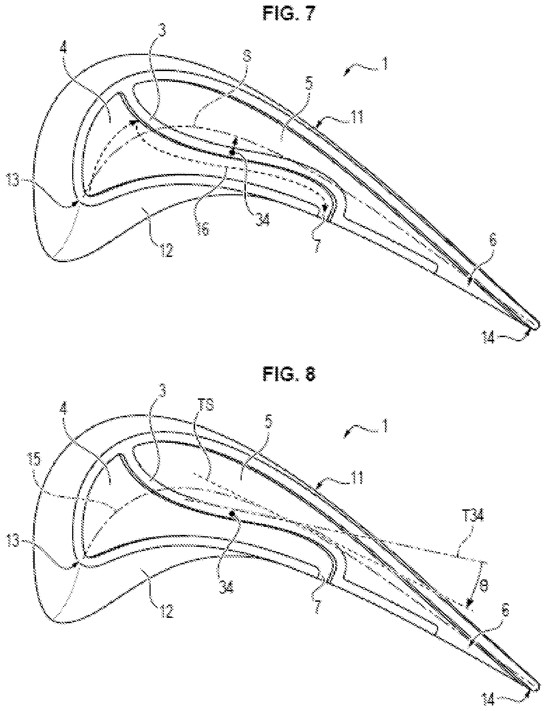

Par ailleurs, l'écart entre la ligne S de squelette et le point d'inflexion 34 de la nervure 3 peut être optimisé (figure 7) de façon à être compris entre -0,8mm et 1,2mm, préférentiellement entre - 0,5mm et 1,2mm, et encore plus de préférence entre 1,1mm et 1,2mm (le signe de la distance étant positif lorsque le point d'inflexion 34 est entre la ligne S de squelette et l'intrados 12, négatif dans le cas contraire).

L'orientation de la portion 3b peut également être optimisée. L'angle θ formé par la tangente T34 (figure 8) de la nervure 3 au point d'inflexion 34 et la tangente TS de la ligne S du squelette, au point de d'intersection entre la tangente T34 et de la ligne S du squelette, est à cet effet par exemple compris entre -20° et +20°, de préférence entre -15,4° et +5,1°, et encore plus de préférence entre -10,8° et -9,7° (le signe de l'angle θ étant défini selon le sens trigonométrique, de la tangente T34 vers la tangente TS).

Par ailleurs, des ouvertures 6 et 7 peuvent également être ménagées au niveau du rebord 2a, du côté de l'intrados 12, pour faciliter l'évacuation de l'air chaud dans les cavités 4 et 5. L'ouverture 6 de la cavité 4 est par exemple au voisinage direct de la nervure 3, tandis que l'ouverture 7 de la cavité 5 est au voisinage direct du bord de fuite 14.

## Revendications

1. Aube (1) de turbine de turbomachine comportant un extrados (11), un intrados (12), un bord d'attaque (13) et un bord de fuite (14) et ainsi qu'une baignoire (2) à son sommet, ladite baignoire (2) comportant au moins une nervure (3) interne, **caractérisée en ce que** ladite nervure (3) s'étend depuis un point d'accroche (31) du rebord (2a) de ladite baignoire (2) côté extrados (11) à un point d'accroche (32) du rebord (2a) de ladite baignoire (2) côté intrados (12), et comporte une portion (3a) de reprise de la charge des écoulements de fuite (16) qui s'étend à partir de l'extrados (11) et une portion (3b) formant un déflecteur qui prolonge la portion (3a) de reprise de charge avec une inflexion et guide les écoulements de fuite (16) vers l'intrados (12).

2. Aube selon la revendication 1, **caractérisée en ce qu'**une zone de la portion (3a) de reprise d'effort de la nervure (3) qui est directement en regard du bord d'attaque (13) est parallèle à la tangente au bord d'attaque (13).

3. Aube selon la revendication 1, **caractérisée en ce que** l'angle (α) que fait la nervure (3) par rapport à la normale (NT11) à l'extrados (11) au niveau du point d'accroche (31) est compris entre -20° et +20°,.

4. Aube selon la revendication 1, **caractérisée en ce que** l'abscisse curviligne du point d'accroche (31) le long du rebord (2a) de la baignoire (2) côté extrados (11) est comprise entre 10% et 26%.

5. Aube selon la revendication 1, **caractérisée en ce que** l'abscisse curviligne du point d'accroche (32) le long du rebord (2a) de la baignoire (2) côté intrados (12) est comprise entre 18% et 66%.

6. Aube selon la revendication 1, **caractérisée en ce que** l'angle (β) que fait la nervure (3) par rapport à la perpendiculaire (NT12) à l'intrados (12) au niveau du point d'accroche (32) est compris entre 0° et 50°.

7. Aube selon la revendication 1, **caractérisée en ce que** l'abscisse curviligne du point (33) où la nervure (3) coupe une ligne (S) de squelette de l'aube (1) est comprise entre 13% et 43%.

8. Aube selon la revendication 1, **caractérisée en ce que** l'écart entre une ligne (S) de squelette et le point d'inflexion (34) de la nervure (3) est compris entre -0,8mm et 1,2mm.

9. Disque de turbine, **caractérisée en ce qu'**il comporte des aubes (1) selon l'une des revendications précédentes.

10. Turbine haute pression de turboréacteur, **caractérisée en ce qu'**elle comporte des aubes (1) selon l'une des revendications 1 à 8.

## Patentansprüche

1. Turbinenschaufel (1) einer Turbomaschine, aufweisend eine Flügeloberseite (11), eine Flügelunterseite (12), eine Vorderkante (13) und eine Hinterkante (14) und einen Squealer (2) an ihrer Spitze, wobei der Squealer (2) mindestens eine innere Rippe (3) aufweist, **dadurch gekennzeichnet, dass** sich die Rippe (3) ab einem Ansatzpunkt (31) der Kante (2a) des Squealers (2) an der Flügeloberseite (11) zu einem Ansatzpunkt (32) der Kante (2a) des Squealers (2) an der Flügelunterseite (12) erstreckt und einen Lastübernahmeabschnitt (3a) der Leckströmungen (16), der sich ab der Flügeloberseite (11) erstreckt, und einen einen Ablenker bildenden Abschnitt (3b), welcher den Lastübernahmeabschnitt (3a) mit einer Biegung verlängert, aufweist und die Leckströmungen (16) zur Flügelunterseite (12) lenkt.

2. Schaufel nach Anspruch 1, **dadurch gekennzeichnet, dass** eine Zone des Kraftübernahmeabschnitts (3a) der Rippe (3), die direkt gegenüber der Vorderkante (13) ist, parallel zur Tangente an der Vorderkante (13) ist.

3. Schaufel nach Anspruch 1, **dadurch gekennzeichnet, dass** der Winkel (α), den die Rippe (3) in Bezug auf die Normale (NT11) an der Flügeloberseite (11) im Bereich des Ansatzpunkts (31) bildet, zwischen -20° und +20° beträgt.

4. Schaufel nach Anspruch 1, **dadurch gekennzeichnet, dass** die gekrümmte Abszisse des Ansatzpunkts (31) entlang der Kante (2a) des Squealers (2) flügeloberseitig (11) zwischen 10 % und 26 % beträgt.

5. Schaufel nach Anspruch 1, **dadurch gekennzeichnet, dass** die gekrümmte Abszisse des Ansatzpunkts (32) entlang der Kante (2a) des Squealers (2) an der Flügelunterseite (12) zwischen 18% und 66% beträgt.

6. Schaufel nach Anspruch 1, **dadurch gekennzeichnet, dass** der Winkel (β), den die Rippe (3) in Bezug auf die Senkrechte (NT12) an der Flügelunterseite (12) im Bereich des Ansatzpunkts (32) bildet, zwischen 0° und 50° beträgt.

7. Schaufel nach Anspruch 1, **dadurch gekennzeichnet, dass** die gekrümmte Abszisse des Punkts (33), wo die Rippe (3) eine Skelettlinie (S) der Schaufel (1) schneidet, zwischen 13% und 43% beträgt.

8. Schaufel nach Anspruch 1, **dadurch gekennzeichnet, dass** der Abstand zwischen einer Skelettlinie (S) und dem Knickpunkt (34) der Rippe (3) zwischen -0,8 mm und 1,2 mm beträgt.

9. Turbinenscheibe, **dadurch gekennzeichnet, dass** sie Schaufeln (1) nach einem der vorangehenden Ansprüche aufweist.

10. Hochdruckturbine eines Turboreaktors, **dadurch gekennzeichnet, dass** sie Schaufeln (1) nach einem der Ansprüche 1 bis 8 aufweist.

## Claims

1. A turbine blade (1) of a turbine engine comprising an upper surface (11), a lower surface (12), a leading edge (13) and a trailing edge (14) as well as a bathtub (2) at its tip, said bathtub (2) comprising at least one internal rib (3), **characterized in that** said rib (3) extends from an attachment point (31) of the rim (2a) of said bathtub (2) on the upper surface (11) side to an attachment point (32) of the rim (2a) of said bathtub (2) on the lower surface (12) side, and includes a force take-up portion (3a) for leakage flows (16) which extends from the upper surface (11) and a portion (3b) forming a deflector which extends the force take-up portion (3a) with an inflection and guides the leakage flows (16) toward the lower surface (12).

2. The blade according to claim 1, **characterized in that** a zone of the force take-up portion (3a) of the rib (3) which directly faces the leading edge (13) is parallel to the tangent to the leading edge (13).

3. The blade according to claim 1, **characterized in that** the angle (α) made by the rib (3) with respect to the normal (NT11) to the upper surface (11) at the attachment point (31) is comprised between -20° and +20°.

4. The blade according to claim 1, **characterized in that** the curvilinear abscissa of the attachment point (31) along the rim (2a) of the bathtub (2) on the upper surface (11) side is comprised between 10% and 26%.

5. The blade according to claim 1, **characterized in that** the curvilinear abscissa of the attachment point (32) along the rim (2a) of the bathtub (2) on the lower surface (12) side is comprised between 18% and 66%.

6. The blade according to claim 1, **characterized in that** the angle (β) made by the rib (3) with respect to the perpendicular (NT12) to the lower surface (12) at the attachment point (32) is comprised between 0° and 50°.

7. The blade according to claim 1, **characterized in that** the curvilinear abscissa of the point (33) where the rib (3) intersects a camber line (S) of the blade (1) is comprised between 13% and 43%.

8. The blade according to claim 1, **characterized in that** the space between a camber line (S) and the inflection point (34) of the rib (3) is comprised between -0.8mm and 1.2mm.

9. A turbine disk, **characterized in that** it comprises blades (1) according to one of the preceding claims.

10. A turbojet high-pressure turbine, **characterized in that** it comprises blades (1) according to one of claims 1 to 8.
